# EUROPEAN PATENT SPECIFICATION

(11) **EP 1 754 929 B1**
(45) Date of publication and mention of the grant of the patent: **14.03.2012**
(21) Application number: 06254344.2
(22) Date of filing: 18.08.2006
(51) Int. Cl.: F16M 13/02

(54) **Adjustable mount**
Justierbare Halterung
Support ajustable

(30) Priority: 18.08.2005 GB 0516914
(43) Date of publication of application: 21.02.2007
(73) Proprietor: AVF Group Limited, Telford, Shropshire TF1 7YE (GB)
(72) Inventor: Short, Mark, Kingswinford, West Midlands DY6 8SR (GB); Nicholls, Kenneth Gary, Wolverhampton, West Midlands WV1 2EG (GB); Worrall, Raymond, Wolverhampton West Midlands, WV10 7DN (GB)
(74) Representative: Moffat, John Andrew

(56) References cited:
- US-A- 2 965 339
- US-A- 3 155 358
- US-A1- 2004 118 987

## Description

This invention relates to an adjustable mount for a flat panel screen, such as an LCD screen, and has particular application to the mounting of a liquid crystal television set to a vertical wall or equivalent surface.

A problem which has been encountered with the mounting of such a liquid crystal television set is ensuring that the set is level, i.e. that its upper longer surface is horizontal. Although care may be taken to secure the TV mount accurately to the wall or equivalent surface, it can still occur that when the TV set is secured to the mount using pre-formed fixing points thereof, it is tilted to the horizontal, with there being no means of adjustment.

US patent number 2,965,339 discloses a mount for a picture which comprises a pair of cooperative elements adapted to be secured, respectively, to a wall and to the picture, and which includes a screw arranged to engage with the cooperative elements to permit a degree of adjustment of the picture about a horizontal axis.

An object of the invention is to provide an adjustable mount for a flat panel screen, such as an LCD screen, which overcomes the above-mentioned problem.

According to the invention there is provided an adjustable mount for mounting a flat panel display screen on a support comprising a first component adapted for securement to said support and forming a rear of the mount, a second component engaged with the first component and forming a front of the mount to which the screen is intended to be secured, in use, and adjustment means acting between the first and second components to alter the relative positioning therebetween, characterised in that the adjustment means comprises a pair of screws wherein each of the pair of screws is engaged with a complementary screw thread of one of the components and having its shank abutting or capable of abutting the other of the components, so that rotation of each of the pair of screws can alter the roll of the flat panel display screen when provided on the mount.

The term roll is used herein to denote movement about a horizontal axis, as is commonly understood by the term roll when describing degrees of freedom, the other degrees of freedom being pitch and yaw.

Desirably the pair of screws are threadedly engaged in the second component and can each be rotated in one direction so that the end of the screw shank engages the first component to alter the tilt of the second component relative to the first component fixed to said surface, in use, in a generally vertical plane. In a particular embodiment, the first component has at least one upper slot therein, in which is received respectively at least one hook of the second component to effect said engagement of the two components. The or each slot is longer than the hook received therein to allow for the relative tilting adjustment of the second component to the first component. The first component is sized to fit within the second component.

Conveniently the locking means comprises at least one screw engaged with the second component having its shank received in a slot of the first component.

The invention will now be described, by way of example, with reference to the accompanying drawings, in which:
Figure 1 is a front perspective view of a first embodiment of an adjustable mount of the invention,
Figure 2 is a rear view of a front plate of the mount of Figure 1, to a reduced scale,
Figure 3 is a rear perspective view of the front plate shown in Figure 2,
Figures 4 to 6 are respectively a top plan view, an underneath plan view and a side view of the front plate of Figures 2 and 3,
Figure 7 is a rear view of a wall plate of the mount of Figure 1, to a reduced scale,
Figure 8 is a rear perspective view of the wall plate of Figure 7,
Figures 9 to 11 are respectively a top plan view, an underneath plan view and a side view of the wall plate of Figures 7 and 8,
Figures 12 and 13 are respectively a front view and a rear perspective view of a front plate of a second embodiment of a mount of the invention,
Figures 14 and 15 are respectively a rear view and a rear perspective view of a wall plate of said second embodiment of a mount of the invention,
Figure 16 is a front perspective view of a third embodiment of a mount of the invention,
Figure 17 is a front perspective view of an other mount not according to the invention,
Figure 18 is an exploded view corresponding to Figure 17,
Figure 19 is a rear view of a first and a second component of the mount shown in Figures 17 and 18,
Figure 20 is a rear view of the first and second components of Figure 19 when coupled together, and
Figure 21 is a front perspective view of the first and second components of Figure 20 coupled to a component configured for mounting on a supporting arm.

The mount shown in the Figures is principally intended for mounting a liquid crystal television set to a support such as a vertical surface of a wall. However instead of a liquid crystal television set, the mount could also be used with flat panel display screens in general, thus including computer monitors.

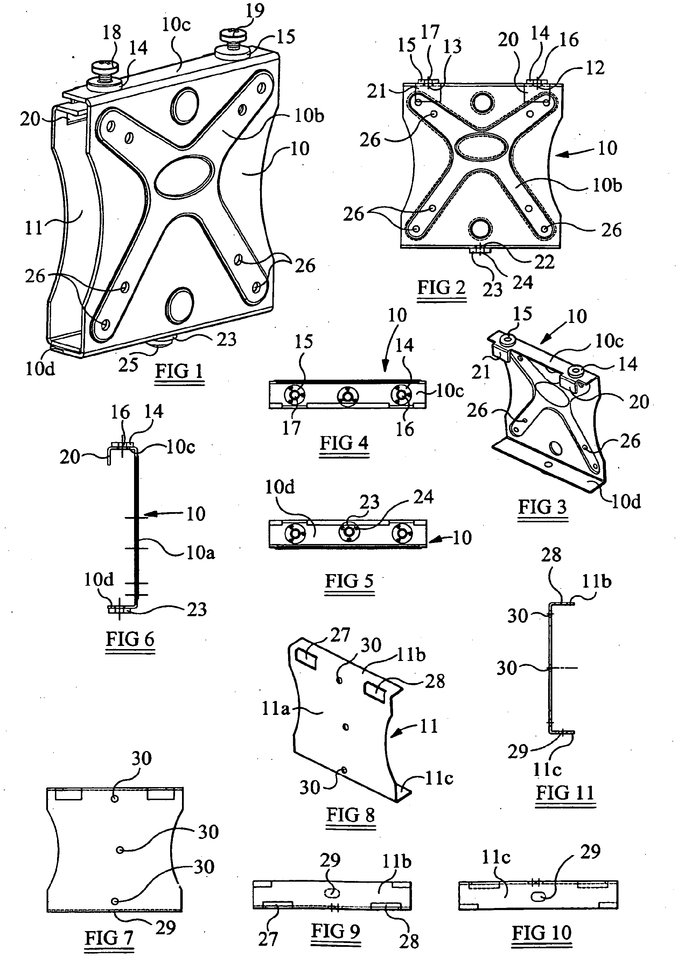

The adjustable mount shown in Figure 1 is basically formed by two components, namely a front plate 10 and a wall plate 11, each plate preferably being formed as a mild steel pressing.

The front plate 10 shown in detail in Figures 2 to 6, has a front part 10a of generally square shape, the front part being generally flat but having pressed or stamped out of it, in this example, a logo 10b generally in the form of a stylised X. At opposite upper and lower parallel sides of the front part 10a are formed integral rectangular flanges 10c, 10d, extending at 90° from the front part 10a and at the same side thereof. The flanges generally extend from the front part 10a each for the same distance.

The upper flange 10c is provided adjacent its respective opposite ends with circular openings 12, 13. At the upper face of the flange 10c respective circular bosses 14, 15 are secured over the openings 12, 13, with respective internally threaded circular openings 16, 17 being co-axial with the larger circular openings 12, 13, therebelow. As shown in Figure 1, respective screws 18, 19 are engaged in the threaded openings 16, 17 respectively for a purpose to be described hereinafter.

At the free longitudinal side of the flange 10c, at respective positions aligned with the respective bosses 14, 15 are integral downwardly depending hooks 20, 21, each hook being of generally rectangular form and being at 90° to the flange 10c, so as to lie parallel to the front part 10a of the front plate 10. The depth of each hook is, in this example, slightly less than the width of the flange 10c.

At the centre of the lower flange 10d there is a circular opening 22 over which at the outer surface of the flange 10d is a circular boss 23 which, like the bosses 14 and 15 has an internally threaded circular opening 24 therethrough, this opening being co-axial with the larger diameter opening 22 in the flange 10d. Accordingly as for the bosses 14, 15, the boss 23 can receive a screw 25, for a purpose to be referred to hereinafter.

The front plate 10 is provided with various fixing openings 26 extending therethrough, and in the example illustrated four pairs of such openings are provided in the respective legs of the stylised X which forms the logo 10b. It will be understood that the rear of the panel to be secured to the front plate 10 would generally have a preset arrangement of fixing openings to correspond to at least some of the fixing openings 26.

The wall plate 11 is of similar form to the front plate 10, having a flat front part 11a from which extends at the same side thereform, at right angles thereto, respective upper and lower flanges 11b and 11c. A pair of longitudinally spaced apart rectangular slots 27, 28, are formed at the upper end of the part 11a, each slot commencing substantially at the junction between the front part 11a and the upper flange 11b, and extending a short way down into the front part 11a, as best shown in Figures 7 and 8. These slots are to receive the hooks 20, 21 respectively, but are oversized relatively thereto, so that there is a clearance at the respective opposite sides of each hook from its associated slot, and additionally there may be a clearance at the longitudinal free end of each hook even when the wall plate 11 is at its uppermost position in the front plate 10 as will be described. To this end it should be noted that, as shown in Figure 1, the wall plate 11 is proportionately smaller than the front plate 10 so that, as shown in that Figure, it can be substantially received therein with its upper flange 11b below the flange 10c and its lower flange 11c above the flange 10d.

An elongated slot 29 is provided in the lower flange 11c midway between its ends, the positioning of this slot being such that, when the front plate and the wall plate are assembled together as shown in Figure 1, the shank of the screw 25, when the screw is tightened, will extend into this slot 29 and thereby prevent the front plate and the wall plate swinging apart. Finally with regard to the wall plate 11, it will be noted that it is provided with three generally vertically spaced fixing openings 30 generally centrally in its front part 11 a, these openings 30 being to allow the plate 11 to be fixed to a wall or equivalent surface.

From the description above, it will be understood that with all the screws 18, 19 and 25 unscrewed to their respective outermost positions engaged in their respective bosses, it is possible to engage together the front plate 10 with the wall plate 11 by presenting the front plate 10 substantially at 90° to the wall plate 11 and manipulating it so that the hooks 20, 21 are received in the respective slots 27, 28 of the wall plate 11 and then swinging the front plate 10 in a pivoting motion to the position shown in Figure 1 where the front part 10a of the front plate 10 is substantially parallel to the front part 11a of the wall plate 11. Before the pivoting takes place, the wall plate 11 is secured to a wall or equivalent surface so that it is vertical. When a television or other flat panel is then secured to the front plate 10 using the fixing openings 26, the weight of the panel/television will bring the front plate 10 vertically downwards so that the underside of its upper flange 10c will bear on the upper surface of the upper flange 11b of the wall plate 11, given that the screws 18 and 19 do not project beyond the lower surface of the flange 10c.

If, in the position now described, the panel or television is correctly mounted, i.e. with its upper longitudinal surface horizontal, then no adjustment of the mount is required. However if the upper surface of the panel or television is not horizontal, it is possible to adjust the mount so that this surface becomes horizontal. This adjustment is by way of adjusting one of the screws 18 and 19, so as, in a sense, to tilt the front plate 10 relative to the fixed wall plate 11 in a vertical plane so that the upper surface of the object mounted moves to become horizontal. It will be understood that the free end of the shank of the screw 18 or 19 which is adjusted bears against the upper surface of the flange 11b of the wall plate so as effectively to 'push' the front plate upwards and it can be seen that this produces a slight pivoting movement about the point of engagement of the shank of the other screw on the flange 11b. During this adjustment the screw 25 will have been tightened so that its shank is received in the elongated slot 29, and the elongation of that slot enables the tilting/adjustment movement described to take place, in that it allows for the pivoting of the front plate relative to the wall plate even though they are secured together against pivoting about the hooks 20, 21 and slots 27, 28 by virtue of the screw 25 which effectively locks the two plates together. The tilting adjustment provided by screws 18, 19 depending upon which way the tilt is to be adjusted, is facilitated by the relatively loose fit of the hooks 20, 21 in the oversized slots 27, 28.

It may be possible to provide adjustment by means of a single screw instead of the two screws 18, 19, and in particular the arrangement could be used if the surface in question is below horizontal and it is required to 'jack' it up to the horizontal position. The disadvantage with the single screw is that it is generally only possible to adjust in one direction, whereas with the two screws shown in Figure 1, adjustment can be made from above or below horizontal.

In an alternative arrangement, the adjustment means could be provided so that the equivalent of the screws 18 and 19 is provided at the bottom of the mount.

Whilst the pivot between the front plate 10 and the wall plate 11 is, in the example illustrated by way of the hooks 20, 21 and slots 27, 28, there could instead be a loose pivot pin arranged in sliding engagement between the two parts.

Although the example shown in provided with a single slot 29 and screw 25 coupling between the front plate 10 and the back plate 11, multiple slots with respective screws may be employed. Thus, slots may be provided at intervals along the length or width of flange 11c.

In a still further embodiment, the lower flange 11c of the wall plate could be provided with a forwards extension, either as a separate part or integrally, to provide one or more further slots 29 forwardly of the slot 29 shown so that the two plates 10 and 11 could be locked together with the parts 10a and 11a at an angle to one another rather than being parallel as shown in Figure 1, i.e. with the front plate tilted relatively to the wall plate 11 so as to incline the panel or screen carried by the front plate 10.

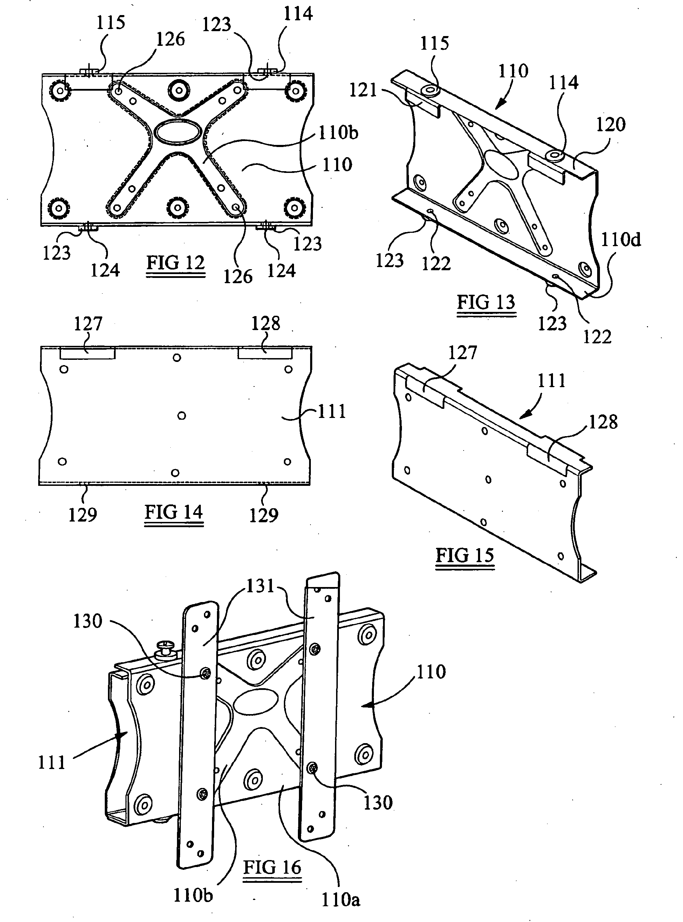

Figures 12 to 15 show an alternative embodiment of a mount of the invention, this alternative form of mount however being wider to accommodate a larger panel. Structurally, however, both the front plate and the wall plate are substantially identical to the components 10 and 11 respectively and parts corresponding to the front plate 10 and wall plate 11 of the first embodiment are thus for convenience shown with the same reference numerals but with the prefix 100. Accordingly it will be seen from Figures 12 to 15 that the only significant difference apart from the increased spacing apart of the bosses 114, 115, hooks 120, 121 and slots 127, 128 is that instead of there being a single boss at the underside of the lower flange of the front plate 110 there are now two spaced apart bosses 123, each with an internally screw threaded circular opening 124 therethrough in alignment with a larger circular opening 122 in the flange 110d. Correspondingly the lower flange of the wall plate 111 is provided with two spaced apart elongated slots 129 as shown in Figure 14, so that the shanks of respective screws engaged in the threaded bosses 123 can be received in the elongated slots 129 to lock together the front plate and the wall plate against pivotal movement between the two components about the connection of the hooks of the front plate in the slots of the wall plate, in the same manner as described in the first embodiment.

In the still further embodiment of the mount shown in Figure 16, the front plate 110 and wall plate 111 are of the form shown in Figures 12 to 15. However with this embodiment a pair of spaced parallel mild steel adaptor plates 131 are secured by screws to the outwardly facing surface of the front part 110a of the front plate 110 in order to provide fixing openings for a larger panel or screen, each adaptor plate being secured to the front plate 110 by suitable fixings 130 in the openings in the logo 110b.

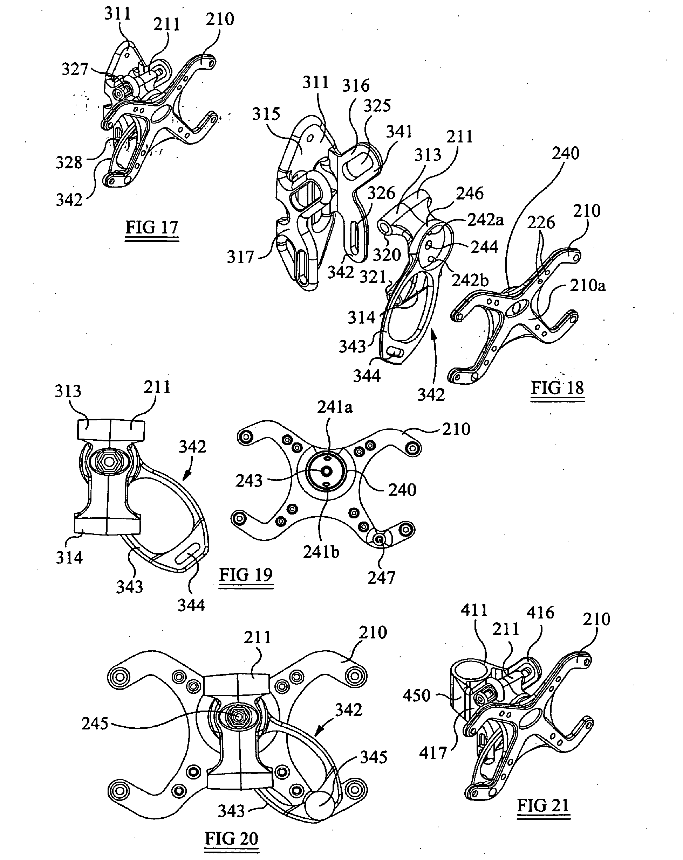

Figures 17 through 20 show an other mount not according to the present invention. Since some of the component parts have similar functions to those of the mount shown in Figures 1 through 11, identical reference numerals will be used where appropriate with the prefix 200. It will be noted that in this mount the front pressed plate 10 of the first embodiment of the invention has been replaced with a front plate 210 of a cast skeleton design. The front plate 210 is of a substantially planar X-shape and includes means, in the form of screw holes 226, for securing a flat panel display to its front surface 210a. The rear of the front plate 210 is configured for engagement with a rear component 211 of the adjustable mount. As can be seen from Figures 18 and 19, the rear of the front plate 210 includes an annular projecting element 240 disposed just above the centre of the X. Within the diameter of the annular element 240 are provided upper and lower slots 241a, 241b, respectively, which are configured to receive complementary projections 242a, 242b of the rear component 211, described below. The slots 241a and 241b are configured such that a certain degree of relative rotation of the front plate 210 with respect to the rear component 211 is permitted. The degree of relative rotation being defined by the length of the slots 241a, 241b in which the projections 242a, 242b are free to travel. A hole 243 is provided in the front plate 210, centrally of the annular element 240. The hole 243 is configured to align with a complementary hole 244 on the rear component 211, as described below. A pivot shaft 245 is disposed through the respective holes 243 and 244 in order to provide an axis for rotation of the front plate 210 with respect to the rear component 211. At least one end of the pivot shaft 245 is threaded to allow attachment of a nut (not shown) to secure the front plate 210 and rear component 211 together. A spacer may be provided to ensure that the nut is not over tightened to thereby hinder the desired rotation. Also provided on the rear of the front plate 210, adjacent to an extreme end of a lower leg of the X, is a screw-threaded hole 247. The hole 247 allows for horizontal levelling of the front plate 210 as will be described below.

The rear component 211 is a cast tilt component with a pair of vertically spaced arms 313 and 314. The upper arm 313 carries a first pivot 320 and the lower arm 314 carries a second pivot 321. The pivots 320, 321 are configured for engagement with a further component 311 configured for attaching the mount to a supporting vertical surface. The further component 311 has a pair of spaced parallel sides 316 and 317, each of which includes respective first and second elongate slots 325, 326. Each side of the further component 311 is configured with respective vertically spaced arms 341 and 342 for accommodating the upper and lower elongate slots 325, 326. The slots 325 and 326 are orientated with the upper slots 325 being directed upwardly and forwardly of the further component 311 and the lower slots 326 being vertical. A base 315 connects the sides 316 and 317. The base 315 is configured for mounting on a vertical support surface. The first and second pivots 320, 321 each comprise pivot pins 327 and 328. An upper one of the pivots 320 has its pin 327 extending through respective openings in the upper arm 313 of the rear component 211 and into said upper slots 325 in the upper side arms 341 of the further component 311 for sliding therealong, whilst the lower one of the pivots 321 has its pin 328 extending through respective openings in the lower arm 314 of the rear component 211 and into the lower slots 326 in the lower side arms 342 of the further component 311 for sliding therealong. Through the above arrangement the rear component 211 may be tilted with respect to the further component 311. This tilting mechanism forms the subject of the Applicant's co-pending UK patent application number GB0516913.1.

The front of the rear component 211 includes a substantially annular projecting element 246. The annular element 246 is of a diameter slightly larger than that of the annular element 240 on the rear of the front plate 210. Thus, when assembled, the annular element 240 of the front plate 210 is received within the annular element 246 of the rear component 211. In this arrangement, projections 242a, 242b provided on the rear component 211, within the annular element 246 are received in the slots 241a, 241b of the front plate 210. A hole 244 is provided in the rear component 211, centrally of the annular element 246, to receive the pivot shaft 245 as described above.

Depending downwardly from the edge of the annular element 246, at an angle from the vertical, is a means 342 for adjusting the roll or tilt of a flat panel display when provided on the front plate 210. The means 342 comprises a substantially oval shaped support 343 with an open centre. An angled slot 344 is provided in the oval support 343, close to its furthest point from the annular element 246. In use, a screw 345 is engaged through the slot 344 and into the screw threaded hole 247 on the front plate 210. Roll, for example to effect horizontal levelling of a mounted flat panel display, is permitted by movement of the screw 345 along the slot 344. Subsequent tightening of the screw 345 fixes the front plate 210 in the desired horizontal position.

In an alternative arrangement, the tilting and levelling mechanism of Figures 17 to 20 is configured for mounting on a supporting arm rather than a vertical surface. In this case, the further component 411 may be configured for pivotal engagement with the supporting arm and may include a cylindrical tube 450, as shown in Figure 21. The cylindrical tube 450 connects sides 416 and 417 of the further component 411 and effectively replaces the base 315 in Figures 17 and 18. All other components in Figure 21 are identical to those of Figures 17 to 20.

## Claims

1. An adjustable mount for mounting a flat panel display screen on a support comprising
a first component (11,111) adapted for securement to said support and forming a rear of the mount,
a second component (10,110) engaged with the first component and forming a front of the mount to which the screen is intended to be secured, in use, and
adjustment means acting between the first (11,110) and second (10,110) components to alter the relative positioning therebetween,
**characterised in that** the adjustment means comprises a pair of screws (18,19) wherein each of the pair of screws (18,19) is engaged with a complementary screw thread (16,17) of one of the components and having its shank abutting or capable of abutting the other of the components, so that rotation of each of the pair of screws (18,19) can alter the roll of the flat panel display screen when provided on the mount.

2. An adjustable mount according to claim 1, further comprising a locking means to prevent the first (11,111) and second (10,110) components swinging apart.

3. An adjustable mount according to claim 2, wherein the locking means comprises at least one screw (25) engaged with the second component (10,110) having its shank received in a slot (29,129) of the first component (11,111).

4. An adjustable mount according to claim 3, wherein the slot (29,129) is elongated such that it enables adjustment of the relative positioning of the first (11,111) and second (10,110) components while said first (11,111) and second (10,110) components are secured together by the at least one screw (25).

5. An adjustable mount according to any preceding claim, wherein the pair of screws (18,19) are threadedly engaged in the second component (10,110) and can each be rotated in one direction so that the end of the screw shank engages the first component (11,111) to alter the tilt of the second component (10,110) relative to the first component (11,111) fixed to said surface, in use, in a generally vertical plane.

6. An adjustable mount according to any preceding claim, wherein the first component (11,111) has at least one upper slot (27,28,127,128) therein, in which is received respectively at least one hook (20,21,120,121) of the second component (10,110) to effect said engagement of the two components (10,11,110,111), the or each slot (27,28,127,128) being longer than the hook (20,21,120,121) received therein to allow for the relative tilting adjustment of the second component (10,110) to the first component (11,111).

7. An adjustable mount according to any preceding claim wherein the first component (11,111) is sized to fit within the second component (10,110).

## Patentansprüche

1. Justierbare Halterung für das Montieren eines Flachbildschirmes an einer Haltekonstruktion, die aufweist:
ein erstes Bauteil (11, 111), das für eine Sicherung an der Haltekonstruktion ausgebildet ist und eine Rückseite der Halterung bildet;
ein zweites Bauteil (10, 110), das mit dem ersten Bauteil in Eingriff kommt und eine Vorderseite der Halterung bildet, an der der Bildschirm bei Benutzung gesichert werden soll; und
ein Justiermittel, die zwischen dem ersten (11, 111) und dem zweiten Bauteil (10, 110) wirkt, um die relative Positionierung dazwischen zu verändern,
**dadurch gekennzeichnet, dass** das Justiermittel ein Paar Schrauben (18, 19) aufweist, wobei eine jede des Paares der Schrauben (18, 19) mit einem komplementären Schraubengewinde (16, 17) eines der Bauteile in Eingriff kommt, und wobei ihr Schaft an das andere der Bauteile anstößt oder anstoßen kann, so dass die Drehung einer jeden des Paares der Schrauben (18, 19) die Querneigung des Flachbildschirms verändern kann, wenn er an der Halterung vorhanden ist.

2. Justierbare Halterung nach Anspruch 1, die außerdem ein Verriegelungsmittel aufweist, um zu verhindern, dass das erste (11, 111) und das zweite Bauteil (10, 110) auseinander schwingen.

3. Justierbare Halterung nach Anspruch 2, bei der das Verriegelungsmittel mindestens eine Schraube (25) aufweist, die mit dem zweiten Bauteil (10, 110) in Eingriff kommt, wobei ihr Schaft in einem Schlitz (29, 129) des ersten Bauteils (11, 111) aufgenommen wird.

4. Justierbare Halterung nach Anspruch 3, bei der der Schlitz (29, 129) länglich ist, so dass er die Justierung der relativen Positionierung des ersten (11, 111) und des zweiten Bauteils (10, 110) ermöglicht, während das erste (11, 111) und das zweite Bauteil (10, 110) durch die mindestens eine Schraube (25) miteinander gesichert werden.

5. Justierbare Halterung nach einem der vorhergehenden Ansprüche, bei der das Paar der Schrauben (18, 19) verschraubbar im zweiten Bauteil (10, 110) in Eingriff gebracht wird, und wobei eine jede in einer Richtung gedreht werden kann, so dass das Ende des Schraubenschaftes mit dem ersten Bauteil (11, 111) in Eingriff kommt, um die Neigung des zweiten Bauteils (10, 110) relativ zum ersten Bauteil (11, 111), das an der Fläche befestigt ist, bei Benutzung in einer im allgemeinen vertikalen Ebene zu verändern.

6. Justierbare Halterung nach einem der vorhergehenden Ansprüche, bei der das erste Bauteil (11, 111) mindestens einen oberen Schlitz (27, 28, 127, 128) darin aufweist, in dem jeweils mindestens ein Haken (20, 21, 120, 121) des zweiten Bauteils (10, 110) aufgenommen wird, um den Eingriff der zwei Bauteile (10, 11, 110, 111) zu bewirken, wobei der oder jeder Schlitz (27, 28, 127, 128) länger ist als der Haken (20, 21, 120, 121), der darin aufgenommen wird, um die relative Neigungsjustierung des zweiten Bauteils (10, 110) zum ersten Bauteil (11, 111) zu gestatten.

7. Justierbare Halterung nach einem der vorhergehenden Ansprüche, bei der das erste Bauteil (11, 111) so bemessen ist, dass es in das zweite Bauteil (10, 110) passt.

## Revendications

1. Support ajustable pour monter un dispositif d'affichage à écran plat sur un support, comprenant :
un premier composant (11, 111), adapté pour être fixé sur ledit support et former une partie arrière dudit support ;
un deuxième composant (10, 110), engagé dans le premier composant et formant une partie avant du support, sur laquelle l'écran doit être fixé en service ; et
un moyen d'ajustement agissant entre les premier (11, 111) et deuxième (10, 110) composants pour changer le positionnement relatif entre eux ;
**caractérisé en ce que** le moyen d'ajustement comprend une paire de vis (18, 19), chaque vis de la paire de vis (18, 19) étant engagée dans un filet de vis complémentaire (16, 17) de l'un des composants, sa tige butant ou pouvant buter contre l'autre des composants, de sorte que la rotation de chaque vis de la paire de vis (18, 19) peut changer le roulis du dispositif d'affichage à écran plat lors de son positionnement sur le support.

2. Support ajustable selon la revendication 1, comprenant en outre un moyen de verrouillage pour empêcher l'écartement par picotement des premier (11, 111) et deuxième (10, 110) composants.

3. Support ajustable selon la revendication 2, dans lequel le moyen de verrouillage comprend au moins une vis (25) engagée dans le deuxième composant (10, 110), sa tige étant reçue dans une fente (29, 129) du premier composant (11, 111).

4. Support ajustable selon la revendication 3, dans lequel la fente (29, 129) est allongée, de sorte à permettre l'ajustement du positionnement relatif des premier (11, 111) et deuxième (10, 110) composants pendant l'assemblage desdits premier (11, 111) et deuxième (10, 110) composants par l'intermédiaire d'au moins une vis (25).

5. Support ajustable selon l'une quelconque des revendications précédentes, dans lequel les vis de la paire (18, 19) sont engagées par filetage dans le deuxième composant (10, 110) et peuvent chacune être tournées dans une direction, de sorte que l'extrémité de la tige de la vis s'engage dans le premier composant (11, 111) pour changer l'inclinaison du deuxième composant (10, 110) par rapport au premier composant (11, 111) fixé en service sur ladite surface, dans un plan généralement vertical.

6. Support ajustable selon l'une quelconque des revendications précédentes, dans lequel le premier composant (11, 111) comporte au moins une fente supérieure (27, 28, 127, 128), recevant respectivement au moins un crochet (20, 21, 120, 121) du deuxième composant (10, 110) pour entraîner ledit engagement des deux composants (10, 11, 110, 111), la ou chaque fente (27, 28, 127, 128) ayant une longueur supérieure celle du crochet (20, 21, 120, 121) qui y est reçu, pour permettre l'ajustement de l'inclinaison relative du deuxième composant (10, 110) par rapport au premier composant (11, 111).

7. Support ajustable selon l'une quelconque des revendications précédentes, dans lequel le premier composant (11, 111) est dimensionné de sorte à pouvoir être ajusté dans le deuxième composant (10, 110).
